# EUROPÄISCHE PATENTSCHRIFT

(11) **EP 1 791 023 B1**
(45) Veröffentlichungstag und Bekanntmachung des Hinweises auf die Patenterteilung: **14.01.2009**
(21) Anmeldenummer: 05111253.0
(22) Anmeldetag: 24.11.2005
(51) Int. Cl.: G03B 42/04

(54) **Vorrichtung und Verfahren zum Auslesen einer Speicherleuchtstoffplatte**
Device and method for reading a phosphor storage plate
Dispositif et procédé destinées à la lecture d`un disque fluorescent de Mémoire

(43) Veröffentlichungstag der Anmeldung: 30.05.2007
(73) Patentinhaber: Agfa-Gevaert HealthCare GmbH, 51373 Leverkusen (DE)
(72) Erfinder: Hartmann, Thomas Dr., 82449 Uffing am Staffelsee (DE); Kastl, Alfons, 85653 Aying (DE); Schindlbeck, Günther, 81545 München (DE); Loistl, Rudolf, 82008 Unterhaching (DE); Ketterer, Hans, 85640 Putzbrunn (DE); Butz, Otto, 85375 Neufahrn (DE); Heinz, Jürgen, 87616 Marktoberdorf (DE); Atzenbeck, Markus, 86899 Landsberg/Lech (DE)

(56) Entgegenhaltungen:
- EP-A- 1 014 174
- US-A- 3 286 092
- US-A- 5 265 865
- US-A1- 2004 251 596

## Beschreibung

Die Erfindung betrifft eine Vorrichtung sowie ein entsprechendes Verfahren zum Auslesen einer Speicherleuchtstoffplatte gemäß dem Oberbegriff des Anspruchs 1 bzw. 10.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Die Patentanmeldung US 2004/0251596 A1 offenbart eine Kassette mit einer innerhalb der Kassette beweglichen Auflage, auf welcher sich eine flexible Speicherleuchtstoffplatte befindet. Zu Beginn der Entnahme der Speicherleuchtstoffplatte aus der Kassette wird die Kassette durch Aufklappen einer Verschlussklappe geöffnet und die Auflage innerhalb der Kassette in Richtung der Kassettenöffnung befördert, bis sie schließlich an ein im Bereich der Kassettenöffnung am Kassettenboden angeordnetes Führungselement stößt, durch welches sie nach unten gedrückt wird und sich dadurch von der Speicherleuchtstoffplatte löst. Die Speicherleuchtstoffplatte wird anschließend von einem nicht näher beschriebenen Mechanismus aus dem Inneren der Kassette herausgezogen und einer Ausleseeinrichtung zugeführt. Während des Transports innerhalb der Kassette wird die Auflage durch Gleit- oder Rollenlager entlang des inneren Kassettenrandes geführt.

Bei der oben beschriebenen Vorrichtung kann es vorkommen, dass die Speicherleuchtstoffplatte nicht mit der erforderlichen Genauigkeit bezüglich der Ausleseeinrichtung positioniert ist, was einen Verlust an Röntgeninformation beim Auslesen der Speicherleuchtstoffplatte zur Folge haben kann.

Aus EP 1 014 174 A1 ist eine Vorrichtung bekannt, bei welcher eine Speicherfolie relativ zu einem Scanner ausgerichtet wird, während sie mit ihrem hinteren Ende in die Kassette ragt.

Es ist Aufgabe der vorliegenden Erfindung, eine Vorrichtung sowie ein Verfahren zum Auslesen einer Speicherleuchtstoffplatte anzugeben, bei welcher bzw. welchem auf einfache Weise eine möglichst präzise und zuverlässige Ausrichtung der Speicherleuchtstoffplatte relativ zur Ausleseeinrichtung sowie relativ zur Auflage erreicht wird.

Diese Aufgabe wird gemäß Anspruch 1 bzw. 9 dadurch gelöst, dass eine Positioniereinrichtung zum Verschieben der Auflage, auf welcher die Speicherleuchtstoffplatte liegt, vorgesehen ist. Die Auflage wird durch die Positioniereinrichtung in eine zweite Richtung verschoben, welche von einer ersten Richtung, in welcher die Speicherleuchtstoffplatte zur Ausleseeinrichtung transportiert wird, verschieden ist, so dass die Auflage und die darauf befindliche Speicherleuchtstoffplatte relativ zur Ausleseeinrichtung ausgerichtet werden. Darüber hinaus ist vorgesehen, dass die Positioniereinrichtung die auf der Auflage liegende Speicherleuchtstoffplatte relativ zur Auflage verschieben kann. Auf diese Weise ist nicht nur eine Ausrichtung der Auflage und damit der Speicherleuchtstoffplatte relativ zur Ausleseeinrichtung, sondern auch eine Ausrichtung der Speicherleuchtstoffplatte relativ zur Auflage möglich.

Die Erfindung basiert auf dem Gedanken, eine Ausrichtung der Speicherleuchtstoffplatte relativ zur Ausleseeinrichtung nicht durch ein Verschieben der Speicherleuchtstoffplatte selbst, sondern durch ein Verschieben der Auflage, auf welcher sich die Speicherleuchtstoffplatte befindet, zu erreichen. Hierdurch wird eine einfache, zuverlässige und präzise Ausrichtung der Speicherleuchtstoffplatte relativ zur Ausleseeinrichtung ermöglicht. Gleichzeitig bleibt bei der erfindungsgemäßen Ausrichtung durch Verschieben der Auflage die Position der Speicherleuchtstoffplatte relativ zur Auflage unverändert, so dass nach dem Auslesen ein sicherer Rücktransport der Speicherleuchtstoffplatte zurück auf die Auflage gewährleistet wird.

Vorzugsweise wird die Auflage durch die Positioniereinrichtung in der zweiten Richtung verschoben, während sich die Auflage und die darauf liegende Speicherleuchtstoffplatte zumindest teilweise außerhalb der Kassette befinden. Hierdurch ist die Auflage für die Positioniereinrichtung besonders einfach zugänglich.

Es ist außerdem bevorzugt, dass die Positioniereinrichtung ein oder mehrere Ausrichtstifte und die Auflage ein oder mehrere Führungen umfasst, in welche die Ausrichtstifte eingreifen können. Insbesondere sind die Führungen als Aussparungen im Bereich eines Randes der Auflage ausgebildet, so dass die Ausrichtstifte in diese Aussparungen eingreifen können, wobei eine Verschiebung und Ausrichtung der Auflage erfolgt. Diese Ausgestaltung stellt eine besonders kostengünstige und zuverlässige Variante der Erfindung dar.

Vorzugsweise weisen die Aussparungen im Bereich des Randes der Auflage eine oder mehrere Abschrägungen auf. Durch die Abschrägung der Aussparungen wird bei besonders einfachem Aufbau eine noch zuverlässigere Ausrichtung der Speicherleuchtstoffplatte relativ zur Ausleseeinrichtung gewährleistet.

In einer weiteren bevorzugten Variante der Erfindung ist vorgesehen, dass die Ausrichtstifte über die Ebene der Auflage hinausragen und dabei entlang der Führungen bzw. Aussparungen in Richtung auf die Speicherleuchtstoffplatte zubewegt werden; die Speicherleuchtstoffplatte wird hierdurch in Bewegungsrichtung der Ausrichtstifte verschoben. Die auf der Auflage liegende Speicherleuchtstoffplatte wird hierbei durch die Positioniereinrichtung vorzugsweise in eine dritte Richtung verschoben, welche der ersten Richtung, in welcher die Speicherleuchtstoffplatte zur Ausleseeinrichtung transportiert wird, entgegengesetzt ist.

Es ist außerdem bevorzugt, dass die Positioniereinrichtung solange mit der Auflage in Kontakt steht, bis die Speicherleuchtstoffplatte nach dem Auslesen in der Ausleseeinrichtung wieder auf der Auflage abgelegt wird. Hierdurch wird gewährleistet, dass die Auflage ihre bezüglich der Ausleseeinrichtung ausgerichtete Position beibehält, so dass eine besonders sichere Rückführung der Speicherleuchtstoffplatte zurück zur Auflage nach dem Auslesevorgang gewährleistet wird.

Weitere bevorzugte Ausführungsbeispiele sind in den Figuren dargestellt. Es zeigen:
- Fig. 1a) bis 1e):: eine schematische Seitenansicht (Querschnitt) einer Kassette in unterschiedlichen Phasen während der Entnahme der Speicherleuchtstoffplatte;
- Fig. 2:: eine perspektivische Ansicht einer Kassette zusammen mit der Positioniereinrichtung;
- Fig. 3:: eine Draufsicht (Detail) der Positioniereinrichtung;
- Fig. 4:: eine weitere Draufsicht der erfindungsgemäßen Vorrichtung; und
- Fig. 5:: einen Querschnitt durch die Kassette, wenn sich die Auflage zusammen mit der darauf befindlichen Speicherleuchtstoffplatte teilweise außerhalb der Kassette befindet.

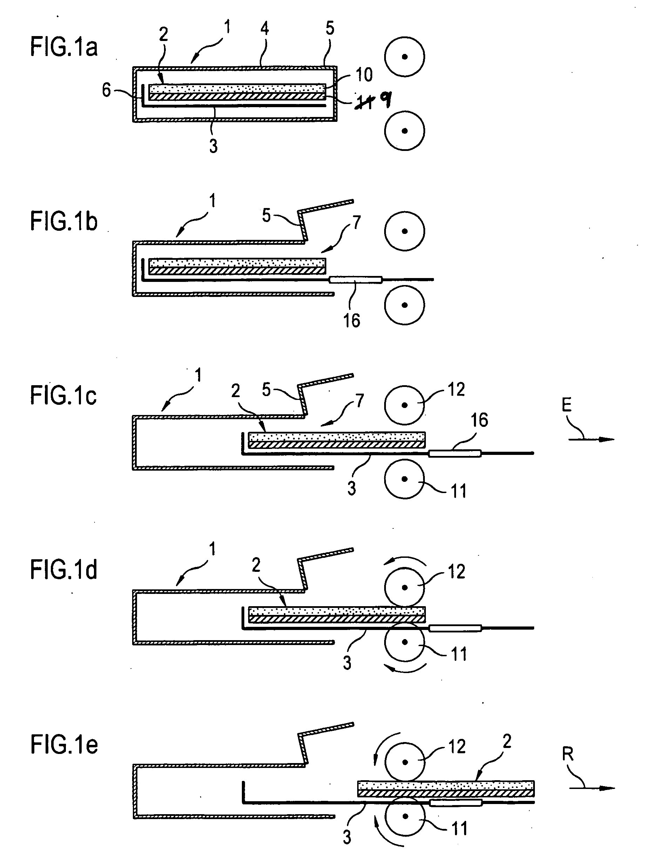

Die Fig. 1a) bis 1e) zeigen eine Kassette 1 in unterschiedlichen Phasen während der Entnahme einer Speicherleuchtstoffplatte 2. Die Kassette 1 umfasst ein Kassettengehäuse 4 mit einer Öffnung, welche durch eine schwenkbare Verschlussklappe 5 lichtdicht verschlossen wird. Im Inneren des Kassettengehäuses 4 befindet sich eine ebene Auflage 3, auf welcher die Speicherleuchtstoffplatte 2 liegt.

Die Speicherleuchtstoffplatte 2 besteht im Wesentlichen aus einer Speicherleuchtstoffschicht 10, die auf einem Substrat 9 aufgebracht ist. Bei der Speicherleuchtstoffschicht 10 handelt es sich beispielsweise um pulverförmige Speicherleuchtstoffpartikel, die mit Hilfe eines geeigneten Bindemittels auf das Substrat 9 aufgebracht werden. Alternativ kann die Speicherleuchtstoffschicht 10 aus einer Vielzahl von nadelförmigen Leuchtstoffstrukturen bestehen, welche vorzugsweise durch Aufdampfen auf dem Substrat 9 erzeugt werden. Die entsprechenden Speicherleuchtstoffplatten werden daher auch als Powder Image Plates (PIP) bzw. Needle Image Plates (NIP) bezeichnet.

Bei dem Substrat 9 handelt es sich vorzugsweise um eine dünne, flexible Folie aus einem für Röntgenstrahlung durchlässigen Material, wie z. B. Kunststoff. Die Speicherleuchtstoffplatte 2 liegt mit ihrem Substrat 9 lose auf der Auflage 3 und wird im Wesentlichen durch Reibungskräfte und/oder Formschluss, z. B. durch ein oder mehrere Umrandungselemente 6 und/oder Fixierelemente auf der Auflage 3 gehalten.

In Fig. 1b) ist eine erste Phase des Entnahmevorgangs dargestellt, in welcher die stirnseitige Öffnung 7 der Kassette 1 durch Hochklappen einer schwenkbaren Verschlussklappe 5 freigegeben wird. Eine Entnahmeeinrichtung 16 greift am Rand der Auflage 3 an und befördert diese, wie in Fig. 1c) dargestellt, zusammen mit der darauf befindlichen Speicherleuchtstoffplatte 2 aus der Kassette 1 heraus in Richtung E in den Bereich einer Transporteinrichtung, welche in dem dargestellten Beispiel eine erste und zweite Transportwalze 11 bzw. 12 umfasst.

In der in Fig. 1d) dargestellten Phase des Entnahmevorgangs liegen die Transportwalzen 11 und 12 zu beiden Seiten der Speicherleuchtstoffplatte 2 an dieser an und können diese, wie in Fig. 1e) dargestellt, in Richtung R von der Auflage 3 abziehen.

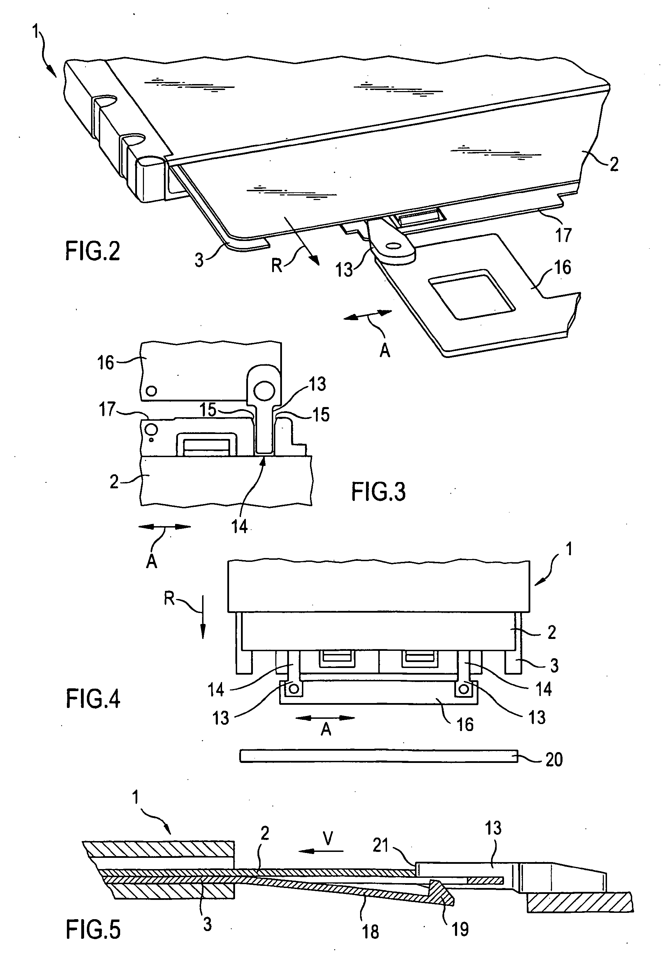

Fig. 2 zeigt eine perspektivische Ansicht eines Ausführungsbeispiels (Ausschnitt). Die Auflage 3 und die darauf liegende Speicherleuchtstoffplatte 2 sind teilweise aus der Kassette 1 herausgezogen. Eine Positioniereinrichtung umfasst einen Ausrichtstift 13, welcher in eine im Bereich des Randes 17 der Auflage 3 vorgesehene Aussparung eingreift und dabei die Auflage 3 in einer zweiten Richtung A, welche im Wesentlichen senkrecht zur ersten Richtung R verläuft, verschieben kann.

In dem dargestellten Beispiel ist der Ausrichtstift 13 an der Entnahmeeinrichtung 16 angebracht, mit welcher die Auflage 3 aus der Kassette 1 heraus befördert wurde (siehe auch Fig. 1b und 1c). Hierdurch kann die Auflage 3 bereits bei deren Entnahme aus der Kassette 1 in Richtung A verschoben und dabei die Speicherleuchtstoffplatte 2 relativ zu einer Ausleseeinrichtung ausgerichtet werden.

Fig. 3 zeigt eine Draufsicht auf ein Detail des in Fig. 2 dargestellten Ausführungsbeispiels. Zu erkennen sind die Auflage 3 sowie die darauf befindliche Speicherleuchtstoffplatte 2. Im Bereich des Randes 17 der Auflage 3 ist eine längliche Aussparung 14 vorgesehen, in welche der Ausrichtstift 13 eingreifen kann und in welcher dieser geführt wird. Im Übergangsbereich von der Aussparung 14 zum Rand 17 der Auflage 3 sind Abschrägungen 15 vorgesehen, mit deren Hilfe die Auflage 3 auf besonders einfache und zuverlässige Weise in der zweiten Richtung A verschoben wird, wenn der Ausrichtstift 13 außermittig in die Aussparung 14 einfährt.

Fig. 4 zeigt eine weitere, stark schematisierte Draufsicht auf die erfindungsgemäße Vorrichtung. Die Positioniereinrichtung umfasst in diesem Beispiel zwei Ausrichtstifte 13, welche in entsprechende Aussparungen 14 in der Auflage 3 einfahren und diese dabei in der zweiten Richtung A relativ zu einer Ausleseeinrichtung 20, in welcher bzw. durch welche die Speicherleuchtstoffplatte 2 in der ersten Richtung R mit einer hier nicht dargestellten Transporteinrichtung (siehe Fig. 1 e) transportiert wird.

Auch in diesem Beispiel befindet sich die Auflage 3 zusammen mit der darauf liegenden Speicherleuchtstoffplatte 2 teilweise außerhalb der Kassette 1. Prinzipiell ist es aber auch möglich, dass die Ausrichtstifte 13 der Positioniereinrichtung in die Aussparungen 14 der Auflage 3 eingreifen, wenn letztere sich zusammen mit der Speicherleuchtstoffplatte 2 vollständig innerhalb der Kassette 1 befindet.

In einer bevorzugten Ausgestaltung der Erfindung ist vorgesehen, dass die Ausrichtstifte 13 nach der Ausrichtung der Auflage 3 so lange in den Aussparungen 14 bleiben und dabei die Auflage 3 relativ zur Ausleseeinheit 20 ausgerichtet halten, bis die Speicherleuchtstoffplatte 2 nach dem Auslesen in der Ausleseeinheit 20 wieder zur Auflage 3 zurückgeführt worden ist und wieder auf dieser liegt. Hierdurch wird gewährleistet, dass die Position der Auflage 3 relativ zur Ausleseeinrichtung 20 während des gesamten Transports und Auslesens der Speicherleuchtstoffplatte 2 unverändert bleibt, so dass die Speicherleuchtstoffplatte 2 mit hoher Zuverlässigkeit wieder in ihre ursprüngliche Position auf der Auflage 3 zurückgeführt werden kann.

Fig. 5 zeigt einen Querschnitt (Ausschnitt) durch die Kassette 1, wenn sich ein Teil der Auflage 3 zusammen mit der darauf befindlichen Speicherleuchtstoffplatte 2 außerhalb der Kassette 1 befindet.

In diesem Zustand ist eine in der Auflage 3 vorgesehene Blattfeder 18 nach unten aus der Ebene der Auflage 3 abgesenkt, so dass sich ein an der Blattfeder 18 vorgesehener Vorsprung 19 ebenfalls unterhalb der Auflage 3 befindet und die Speicherleuchtstoffplatte 2 für den Transport von der Auflage 3 in der ersten Richtung R freigibt.

Wenn sich die Auflage 3 mit der darauf liegenden Speicherleuchtstoffplatte 2 innerhalb der Kassette 1 befindet (nicht dargestellt), wird die Blattfeder 18 durch die Berührung mit dem Boden der Kassette 1 in die Ebene der Auflage 3 gedrückt, so dass der Vorsprung 19 aus der Ebene der Auflage nach oben herausragt und die Speicherleuchtstoffplatte 2 auf der Auflage 3 fixiert.

Der Ausrichtstift 13 der Positioniereinrichtung ist in diesem Beispiel so ausgestaltet, dass er bei einer Bewegung in Richtung V mit seiner Stirnfläche 21 am Rand der Speicherleuchtstoffplatte 2 anliegen und diese dabei in Richtung V relativ zur Auflage 3 verschieben kann. Bei dieser Ausführung der Erfindung kann durch den Ausrichtstift 13 somit nicht nur eine Ausrichtung der Auflage 3 und damit der Speicherleuchtstoffplatte 2 relativ zur Ausleseeinrichtung 20 erfolgen (siehe Fig. 4), sondern auch eine Ausrichtung der Speicherleuchtstoffplatte 2 relativ zur Auflage 3, wodurch insbesondere gewährleistet wird, dass die Speicherleuchtstoffplatte 2 innerhalb des Vorsprungs 19 liegt, wenn sich die Auflage 3 innerhalb der Kassette 1 befindet, so dass der Vorsprung 19 die Speicherleuchtstoffplatte 2 auf der Auflage 3 zuverlässig fixieren kann.

## Patentansprüche

1. Vorrichtung zum Auslesen einer Speicherleuchtstoffplatte (2) mit
- einer Eingabeeinrichtung zur Eingabe einer Kassette (1), in der sich eine beweglich angeordnete Auflage (3) befindet, auf welcher die Speicherleuchtstoffplatte (2) aufliegt,
- einer Ausleseeinrichtung (20) zum Auslesen der Speicherleuchtstoffplatte (2) und
- einer Transporteinrichtung (11, 12), welche die Speicherleuchtstoffplatte (2) von der Auflage (3) nimmt und in einer ersten Richtung (R) zur Ausleseeinrichtung (20) transportiert,
**gekennzeichnet durch**
eine Positioniereinrichtung (13) zum Verschieben der Auflage (3), auf welcher die Speicherleuchtstoffplatte (2) liegt, in eine zweite Richtung (A), welche von der ersten Richtung (R) verschieden ist, so dass die Auflage (3) und die Speicherleuchtstoffplatte (2) relativ zur Ausleseeinrich-tung (20) ausgerichtet werden, wobei die Positioniereinrichtung (13) auch die auf der Auflage (3) liegende Speicherleuchtstoffplatte (2) relativ zur Auflage (3) verschieben kann.

2. Vorrichtung nach Anspruch 1, wobei die Positioniereinrichtung (13) die Auflage (3) in die zweite Richtung (A) verschiebt, während sich die Auflage (3) und die darauf liegende Speicherleuchtstoffplatte (2) zumindest teilweise außerhalb der Kassette (1) befinden.

3. Vorrichtung nach Anspruch 1 oder 2, wobei die Positioniereinrichtung (13) ein oder mehrere Ausrichtstifte und die Auflage (3) ein oder mehrere Führungen (14) umfasst, in welche die Ausrichtstifte eingreifen können.

4. Vorrichtung nach Anspruch 3, wobei die Führungen (14) als Aussparungen im Bereich eines Randes (17) der Auflage (3) ausgebildet sind und die Ausrichtstifte in die Aussparungen eingreifen können, wobei eine Verschiebung und Ausrichtung der Auflage (3) erfolgt.

5. Vorrichtung nach Anspruch 4, wobei die Aussparungen im Bereich des Randes (17) der Auflage (3) eine Abschrägung (15) aufweisen.

6. Vorrichtung nach einem der vorangehenden Ansprüche, wobei die Positioniereinrichtung (13) die auf der Auflage (3) liegende Speicherleuchtstoffplatte (2) in eine dritte Richtung (V) verschieben kann, welche der ersten Richtung (R) entgegengesetzt ist.

7. Vorrichtung nach Anspruch 3, wobei die Ausrichtstifte an einem Rand der Speicherleuchtstoffplatte (2) anliegen und diese dabei relativ zur Auflage (3) verschieben können.

8. Vorrichtung nach einem der vorangehenden Ansprüche, wobei die Positioniereinrichtung (13) so lange mit der Auflage (13) in Kontakt steht und diese relativ zur Ausleseeinrichtung (20) ausgerichtet hält, bis die Speicherleuchtstoffplatte (2) nach dem Auslesen wieder auf der Auflage (3) abgelegt wird.

9. Verfahren zum Auslesen einer Speicherleuchtstoffplatte (2), bei welchem
- eine Kassette (1) bereitgestellt wird, in der sich eine bewegliche Auflage (3) befindet, auf welcher die Speicherleuchtstoffplatte (2) aufliegt, und
- die Speicherleuchtstoffplatte (2) von der Auflage (3) genommen und in einer ersten Richtung (R) zu einer Ausleseeinrichtung (20) transportiert wird, in welcher die Speicherleuchtstoffplatte (2) ausgelesen wird,
**dadurch gekennzeichnet, dass**
die Auflage (3), auf welcher die Speicherleuchtstoffplatte (2) liegt, in eine zweite Richtung (A) verschoben wird, welche von der ersten Richtung (R) verschieden ist, so dass die Auflage (3) und die Speicherleuchtstoffplatte (2) relativ zur Ausleseeinrichtung (20) ausgerichtet werden, und die Positioniereinrichtung (13) die auf der Auflage (3) liegende Speicherleuchtstoffplatte (2) relativ zur Auflage (3) verschiebt.

## Claims

1. An apparatus for reading out a storage phosphor plate (2) with
- an input device for inputting a cassette (1) in which a moveably positioned support (3) on which the storage phosphor plate (2) rests is located,
- a read-out device (20) for reading out the storage phosphor plate (2), and
- a conveyance device (11, 12) which takes the storage phosphor plate (2) from the support (3) and conveys it in a first direction (R) to the read-out device (20),
**characterised by**
a positioning device (13) for moving the support (3) on which the storage phosphor plate (2) rests in a second direction (A) which is different from the first direction (R) so that the support (3) and the storage phosphor plate (2) are aligned relative to the read-out device (20), the positioning device (13) also being able to move storage phosphor plate (2) resting on the support (3) relative to the support (3).

2. The apparatus according to Claim 1, the positioning device (13) moving the support (3) in the second direction (A) while the support (3) and the storage phosphor plate (2) resting on the latter are located at least partially outside of the cassette (1).

3. The apparatus according to Claim 1 or 2, the positioning device (13) comprising one or more alignment pins and the support (3) one or more guides (14) in which the alignment pins can engage.

4. The apparatus according to Claim 3, the guides (15) being in the form of recesses in the region of an edge (17) of the support (3), and the alignment pins being able to engage in the recesses, movement and alignment of the support (3) taking place.

5. The apparatus according to Claim 4, the recesses having a slant (15) in the region of the edge (17) of the support (3).

6. The apparatus according to any of the preceding claims, the positioning device (13) being able to move the storage phosphor plate (2) resting on the support (3) in a third direction (V) which is opposite to the first direction (R).

7. The apparatus according to Claim 3, the alignment pins being adjacent to an edge of the storage phosphor plate (2) and thus being able to move the latter relative to the support (3).

8. The apparatus according to any of the preceding claims, the positioning device (13) remaining in contact with the support (13) and keeping the latter aligned relative to the read-out device (20) until the storage phosphor plate (2) is set back onto the support (3) after read-out.

## Revendications

1. Dispositif pour la lecture d'une plaque luminescente à mémoire (2) comportant
- un dispositif d'introduction destiné à l'introduction d'une cassette (1) dans laquelle se trouve une surface d'appui (3) mobile sur laquelle repose la plaque luminescente à mémoire (2),
- un dispositif de lecture (20) destiné à la lecture de la plaque luminescente à mémoire (2) et
- un dispositif de transport (11, 12) qui enlève la plaque luminescente à mémoire (2) de la surface d'appui (3) et la transporte dans une première direction (R) vers le dispositif de lecture (20),
**caractérisé par**
un dispositif de positionnement (13) destiné à déplacer la surface d'appui (3) sur laquelle repose la plaque luminescente à mémoire (2) dans une deuxième direction (A) différente de la première direction (R) de sorte que la surface d'appui (3) et la plaque luminescente à mémoire (2) soient alignées par rapport au dispositif de lecture (20), le dispositif de positionnement (13) pouvant également déplacer la plaque luminescente à mémoire (2) reposant sur la surface d'appui (3) par rapport à cette surface d'appui (3).

2. Dispositif selon la revendication 1, dans lequel le dispositif de positionnement (13) déplace la surface d'appui (3) dans la deuxième direction (A) pendant que la surface d'appui (3) et la plaque luminescente à mémoire (2) qui y repose se trouvent au moins partiellement en dehors de la cassette (1).

3. Dispositif selon la revendication 1 ou 2, dans lequel le dispositif de positionnement (13) comprend une ou plusieurs broches d'alignement et la surface d'appui (3) comprend un ou plusieurs guidages (14) dans lesquels peuvent s'emboîter les broches d'alignement.

4. Dispositif selon la revendication 3, dans lequel les guidages (14) ont la configuration d'évidements pratiqués à proximité d'un bord (17) de la surface d'appui (3) et les broches d'alignement peuvent s'emboîter dans ces évidements, moyennant quoi il se produit un déplacement et un alignement de la surface d'appui (3).

5. Dispositif selon la revendication 4, dans lequel les évidements pratiqués à proximité du bord (17) de la surface d'appui (3) présentent un chanfrein (15).

6. Dispositif selon l'une des revendications précédentes, dans lequel le dispositif de positionnement (13) peut déplacer la plaque luminescente à mémoire (2) reposant sur la surface d'appui (3) dans une troisième direction (V) opposée à la première direction (R).

7. Dispositif selon la revendication 3, dans lequel les broches d'alignement viennent en butée contre un bord de la plaque luminescente à mémoire (2) et peuvent déplacer cette dernière par rapport à la surface d'appui (3).

8. Dispositif selon l'une des revendications précédentes, dans lequel le dispositif de positionnement (13) reste en contact avec la surface d'appui (13) et maintient cette dernière alignée par rapport au dispositif de lecture (20) jusqu'à ce que la plaque luminescente à mémoire (2) soit redéposée sur la surface d'appui (3) à la suite de la lecture.

9. Procédé pour la lecture d'une plaque luminescente à mémoire (2), dans lequel
- on dispose d'une cassette (1) dans laquelle se trouve une surface d'appui (3) mobile sur laquelle repose la plaque luminescente à mémoire (2), et
- la plaque luminescente à mémoire (2) est enlevée de la surface d'appui (3) et est transportée dans une première direction (R) vers un dispositif de lecture (20) où s'effectue la lecture de la plaque luminescente à mémoire (2),
**caractérisé en ce que**
la surface d'appui (3) sur laquelle repose la plaque luminescente à mémoire (2) subit un déplacement dans une deuxième direction (A) différente de la première direction (R) de sorte que la surface d'appui (3) et la plaque luminescente à mémoire (2) soient alignées par rapport au dispositif de lecture (20), et le dispositif de positionnement (13) déplace la plaque luminescente à mémoire (2) reposant sur la surface d'appui (3) par rapport à la surface d'appui (3).
